(19) Europäisches Patentamt
European Patent Office
Office européen des brevets

(11) **EP 0 829 459 B1**

(12) **EUROPÄISCHE PATENTSCHRIFT**

(45) Veröffentlichungstag und Bekanntmachung des Hinweises auf die Patenterteilung:
**13.10.1999 Patentblatt 1999/41**

(21) Anmeldenummer: **97115282.2**

(22) Anmeldetag: **04.09.1997**

(51) Int. Cl.⁶: **C04B 28/24**, C04B 14/18
// (C04B28/24, 14:18, 24:26, 24:42), C04B111:28

(54) **Nichtbrennbare Wärmedämmplatten auf der Basis von expandierter Perlite-Körnung**

Non-inflammable heat insulating panels based on expanded perlite granules

Plaques calorifuges incombustibles à base de granules de perlite expansée

(84) Benannte Vertragsstaaten:
AT CH DE FR IT LI NL

(30) Priorität: **05.09.1996 DE 29615484 U**

(43) Veröffentlichungstag der Anmeldung:
**18.03.1998 Patentblatt 1998/12**

(73) Patentinhaber: **Krämer, Walter**
**49577 Eggermühlen-Besten (DE)**

(72) Erfinder: **Krämer, Walter**
**49577 Eggermühlen-Besten (DE)**

(74) Vertreter:
**Beszédes, Stephan G., Dr.**
**Patentanwalt,**
**Münchener Strasse 80a**
**85221 Dachau (DE)**

(56) Entgegenhaltungen:
EP-A- 0 475 302        GB-A- 2 010 876
US-A- 3 103 254        US-A- 4 439 239
US-A- 4 525 388

• CHEMICAL ABSTRACTS, vol. 89, no. 26, 25. Dezember 1978 Columbus, Ohio, US; abstract no. 219881j, O.L. GLAGOLEV, ET AL.: Seite 280; XP000063966 & SU 622 780 A (ID.)
• CHEMICAL ABSTRACTS, vol. 91, no. 4, 23. Juli 1979 Columbus, Ohio, US; abstract no. 26077j, N. KUZ'MIN ET AL.: Seite 339; XP000189105 & SU 642 342 A (ID.)
• DATABASE WPI Week 9335 Derwent Publications Ltd., London, GB; AN 93-279937 XP002050196 & SU 1 759 812 A (TERMOIZOLYATSIYA RES PRODN ASSOC)

**Beschreibung**

Die Erfindung betrifft die Verwendung von nichtbrennbaren Platten auf der Basis von expandierter Perlite-Körnung mit einem zur Außenwanddämmung von Gebäuden ausgerichteten Qualitätsprofil.

Zur Erzielung der gemäß Wärmeschutzverordnung geforderten Wärmedämmung von Gebäuden werden nach heutigem Stand der Technik vorwiegend Wärmedämmplatten aus Polystyrolhartschaum, Polyurethanschaum, Glasfaser/Steinwolle oder dergleichen Mineralfaserplatten oder Schaumglasplatten verwendet. Derartige Produkte bewirken zwar eine ausgezeichnete Wärmedämmung, sind jedoch, soweit es sich um organische Dämmstoffe handelt, brennbar, wobei umweltbelastende toxische Zersetzungsprodukte enstehen können, oder, soweit es sich um Glasfaser/Steinwolle handelt, wegen Freisetzung von lungengängigen Faserstäuben mit karzinogenem Potential belastet und als Krebserregende Arbeitsstoffe zu kennzeichnen.

Des weiteren sind Dämmstoffe aus aufgefasertem Recyclingpapier oder aus Schafwolle, Flachs und dergleichen Fasermaterial bekannt, die in der Regel mit Flammschutzmitteln, wie Borsalzen, imprägniert sind. Diese als baubiologisch unbedenklich eingestuften Dämmstoffe sind vorteilhaft zur Innendämmung geeignet.

Generell sind Wärmedämmstoffe gefordert, die keine schädlichen Inhaltsstoffe enthalten, unter Brandbelastung keine toxischen Zersetzungsprodukte freisetzen, und eine umweltverträgliche Entsorgung ermöglichen. Hierzu ist in besonderer Weise expandierte Perlite geeignet.

Das Ausgangsmaterial für Perlite ist ein vulkanisches Silikatgestein mit der mineralogischen Bezeichnung Perlit. Das besondere Kennzeichen dieses Gesteins ist ein bestimmter Gehalt an chemisch gebundenem Wasser. Durch kurzfristiges Erhitzen des zerkleinerten und auf entsprechende Kornfraktionen abgesiebten Perlitgesteins auf etwa 1 000°C verwandelt sich das gebundene Wasser in Dampf und bläht die Gesteinschmelze auf ein Vielfaches ihres ursprünglichen Volumens auf. Auf diese Weise entsteht ein poröses, sehr leichtes und unbrennbares Produkt für zahlreiche Anwendungsgebiete.

Zur Wärmedämmung in Gebäuden wird Perlite vorzugsweise als lose Schüttung von Wand, Dach und Boden im Innenbereich verwendet. Die Herstellung von Wärmedämmplatten, mit dem Qualitätsprofil zur Außenwanddämmung, ist zwar versucht worden, es ist jedoch bisher nicht gelungen, diesen Qualitätsanspruch zu erreichen.

Bei einer Art von nach dem Stand der Technik auf der Basis oder unter Verwendung von Perlite hergestellten Platten handelt es sich um Produkte, die bis zu 40 Gew.-Teile Zellstoffasern und 5 bis 30 Gew.-Teile Bitumen-Emulsion und Stärke enthalten. Derartige Platten haben eine Rohdichte von 150 bis 210 kg/m$^3$ und eine Wärmeleitfähigkeit von 0,055 bis 0,060 W/mK. Aufgrund der hohen organischen Stoffanteile sind diese Produkte nach DIN 4102 als brennbare Baustoffe in der Klasse B eingestuft. Sie sind zwar wegen des Bitumens wasserabweisend, jedoch saugend und trocknen nur sehr langsam. Verwendung finden derartige Produkte als Akustikplatten oder in Kombination mit Gipskartonplatten zur Innenwanddämmung, Schalldämmung und dergleichen Anwendungen. Zur Außenwanddämmung sind diese Produkte nicht geeignet.

Nach einer weiteren bekannten Art von auf der Basis oder unter Verwendung von Perlite hergestellten Platten handelt es sich um solche, welche durch Aufbereiten von Formmassen aus Perlite oder Vermiculite unter Zusatz von mehr als 30 Gew.-Teilen einer handelsüblichen Wasserglaslösung zu einer klebrigen Masse und deren Verdichten im Preßverfahren zu Platten oder Formteilen und Wärmebehandlung der letzteren oberhalb 100°C unter Bildung von stabilen Formkörpern erhalten wurden. Derartige Produkte besitzen zwar günstige brandschutztechnische Eigenschaften, sie sind jedoch wegen der negativen Gebrauchseigenschaften, wie Wasseraufnahme > 60 Gew.-% (damit stark saugend und erweichend), Schwindung > 2,5 Vol.-%, Quellung > 2,0 Vol.-%, ungenügender Haftzugfestigkeit im Verbund mit Beschichtungswerkstoffen und Wärmeleitfähigkeit > 0,06 W/mK, aus technischen und wirtschaftlichen Gründen zur Außenwanddämmung nicht geeignet. Diese Produkte werden vorzugsweise für technische Isolierzwecke, wie zur Hinterisolierung in Industrieöfen und Nachtstromspeicheröfen, im Apparatebau und zur Rohisolierung verwendet.

Es ist also insgesamt festzustellen, daß es trotz intensiver Bemühungen nach dem Stand der Technik bisher keine Wärmedämmplatten auf der Basis und/oder unter Mitverwendung von Perlite gibt, die den Anforderungskriterien zur Außenwanddämmung von Gebäuden entsprechen.

Des weiteren wird in der DE 43 27 074 A1 ein Verfahren zur Herstellung von mineralischen Leicht-Dämmplatten vorgeschlagen, wobei ein Stoffgemisch aus Quarzmehl, Kalk, Zement und Wasser mit Luftporenbildnern zu einer Schaumbetonmasse aufbereitet wird, die analog zur Porenbetonherstellung im Autoklaven unter Wasserdampfdruck erhärtet. Derartige im Kleinformat 50 cm x 37,5 cm hergestellten Platten haben zwar eine Rohdichte von etwa 150 kg/m$^3$ und eine Wärmeleitfähigkeit von 0,045 W/mK, sie sind jedoch von sehr geringer Festigkeit und erweichen bei Wasserlagerung, und sind daher insgesamt empfindliche Produkte, die nur bei pflegsamer Handhabung im Verbund mit Beschichtungswerkstoffen den Aufbau nichtbrennbarer Wärmedämmverbundsysteme ermöglichen. Da ferner diese Leichtdämmplatten lediglich eine Oberflächenhydrophobie aufweisen, wird die Wasseraufnahme lediglich verzögert. Bei Beschädigung ist die ungehinderte Wassereindringung in das hochporöse Dämmaterial gegeben, das heißt eine erhebliche Beeinträchtigung der Wärmedämmung, wobei sogar der Dämmstoff durch Frosteinwirkung zerstört werden kann.

Ferner sind aus der DE 44 01 636 C2 Formkörper, unter Nennung auch von aufgeblähten Teilchen von Perlit mit einem Bindemittel mit einem Gehalt an wäßrigen Kieselsäuresolen bekannt. Der zweite Bestandteil des Bindemittels ist ein Aminsalz eines sauren Metallphosphates oder ein Gemisch eines Aminsalzes eines sauren Metallphosphates und von Aminsalzen der Borsäure. Eine brauchbare Hydrophobierung wird jedoch dadurch nicht erreicht. Das Anforderungsprofil an zur Wärmedämmung von Gebäuden geeignete Wärmedämmplatten wird aber unter anderem durch die Wärmeleitfähigkeit, Wasseraufnahme und Dimensionsstabilität bestimmt. Hierzu ist zu bemerken, daß die Wärmeleitfähigkeit durch Wasseraufnahme erheblich beeinträchtigt wird, das heißt, daß eine effektive, dauerhafte Hydrophobierung zwingend ist, um die Prüfkriterien für eine Zulassung beim Institut für Bautechnik zu erfüllen. Aminsalze saurer Metallphosphate und Gemische von Aminsalzen saurer Metallphosphate und von Aminsalzen der Borsäure haben jedoch keine Hydrophobierwirkung.

Im übrigen wird in Spalte 1, Zeilen 16 bis 22 der DE 44 01 636 C2 praktisch von der Verwendung von kolloidaler Kieselsäure als Bindemittel abgeraten, indem angegeben ist, daß deren Einsatz nur in Ausnahmefällen unter bestimmten Bedingungen erwogen wird. Das zeigt auch, daß die DE 44 01 636 C2 spezifisch auf die Kombination von kolloidalen Kieselsäuresolen mit Aminsalzen saurer Metallphosphate oder Aminsalzen saurer Metallphosphate und Aminsalzen der Borsäure ausgerichtet ist. Kieselsol ist dort in Kombination mit den verschiedenen katalytisch wirkenden Additiven eine zwingende Voraussetzung, um ein filmbildendes, nichtbrennbares Bindemittel für eine Vielzahl von Anwendungen zu erhalten. Eigene Laborversuche ergaben jedoch damit insgesamt negative Ergebnisse hinsichtlich der zur Außenwanddämmung von Gebäuden wichtigen Eigenschaften.

Weiterhin ist in der EP 310 138 A1 ein Wärmeschutzbauelement aus thermisch expandiertem Perlit-Granulat mit einem Korndurchmesser im wesentlichen < 1 mm, welches mit einem Silikonharz und dann mit einem anorganischen Bindemittel, wie Monoaluminiumphosphat, besprüht worden ist und dem ein keramisches Pulver, insbesondere amorphe Kieselsäure zugesetzt worden ist, worauf eine Preß-Formung und Trocknung erfolgt sind, beschrieben. Phosphatbindemittel haben aber in Verbindung mit Perliten gravierende Nachteile. Sie finden vorzugsweise als Bindemittel für feuerfeste Materialien, wie Schamotte, Magnesit und ähnlichen, als auch zur Bindung von Vermiculite-Körnungen Verwendung. Die Verfestigung basiert auf einer Hydrolyse der Phosphate, die oberhalb 160°C einsetzt und in der Regel eine Temperung bis 300°C erfordert. Zur Bindung von porösen Materialien, wie Vermiculite oder Perlite, ist ein Bindemittelbedarf von 30 bis 35 Gew.-% erforderlich. Die quasi glasartige Bindung bewirkt insbesondere bei Perlite-Körnungen eine Versprödung des Produktes. Desweiteren sind schon wegen des hohen Bindemittelbedarfes niedrige Rohdichten, wie < 200 kg/m$^3$ nicht zu erzielen. Ein weiterer Nachteil ist der negative Einfluß auf die Wärmeleitfähigkeit, die bei > 0,08 W/mK, bezogen auf Perlite, liegt.

Bei der amorphen Kieselsäure handelt es sich um ein pulverförmiges Material, das als gefällte Kieselsäure, pyrogene Kieselsäure oder Feinstaub bei der metallurgischen Erzeugung von Silicium, Reisschalenasche und dergleichen technischen Prozessen zugänglich ist. In der EP 310 138 A1 hat amorphe Kieselsäure die Funktion eines inerten Füllstoffes, wie es auch aus deren hohem Mengenanteil hervorgeht, während das Bindemittel ein Monoaluminiumphosphat ist. Bei der Verwendung der amorphen Kieselsäure handelt es sich um eine Maßnahme zum Ausgleich des thermischen Dehnungsverhaltens zum Zwecke der Erzielung einer hohen Temperaturbeständigkeit, die das Perlitematerial nicht hergibt; die feinkörnige Perlite < 0,5 mm wird quasi mit der temperaturstabileren amorphen Kieselsäure ummantelt und bildet bei Erweichung des Perlitekorns unter hoher thermischer Belastung eine stabile Hülle. Perlite hat hier die Funktion eines leichten Stützkornes. Eine Bindemittelfunktion ist der amorphen Kieselsäure nicht zugeordnet. Beim Trocknungsvorgang von amorpher Kieselsäure erfahren nämlich die Siliciumdioxid-Partikel keine Änderung, das heißt, der pulverförmige Zustand bleibt unter Bildung von Agglomeraten erhalten, so daß kein Gelzustand und damit keine Bindung der Perlite-Teilchen entstehen kann. Selbst wenn es anders wäre, könnte die amorphe Kieselsäure die Perlite-Partikel nicht binden, weil die amorphe Kieselsäure mit dem Perlit selbst nicht in Berührung kommt, da dieser schon einen Überzug von einem Siliconharz und einem anorganischen Bindemittel, wie Monoaluminiumphosphat, aufweist. Das Besprühen der Perlite-Körnung < 0,5 mm mit erheblicher Menge an Siliconharzemulsion ist als Präventivmaßnahme erforderlich, um dem Stoffaufbau mit pulverförmiger amorpher Kieselsäure eine Struktur zu vermitteln, die mit dem Bindemittel Monoaluminiumphosphat eine Matrix zur schlüssigen Bindung bewirkt. Bei einer anderen Ausführungsform wird auf die Präventivmaßnahme der Hydrophobierung verzichtet, wobei dann die Perlite < 0,5 mm mit Wasser durchfeuchtet, anschließend mit amorpher Kieselsäure gepudert, und schließlich der Monoaluminiumphosphatbinder zugemischt wird. Hieraus wird deutlich, daß Hydrophobierungsmittel beziehungsweise Wasser dort Maßnahmen sind, um die Saugfähigkeit der feinkörnigen Perlite zu unterdrücken, und damit den Mengenbedarf an Monoaluminiumphosphatbinder zu regeln, da sonst der Bedarf an Bindemittel noch erheblich höher sein würde.

Da das Verfahren der genannten Druckschrift eine Trocknungstemperatur von etwa 300°C erfordert, ist ohnehin die Hydrophobierung im Endprodukt nicht mehr vorhanden, da Silikonharze bei etwa 180 bis 200°C zersetzt werden und somit ihre wasserabweisende Funktion verlieren. Selbst wenn das nicht der Fall wäre, könnte, wie bereits weiter oben erläutert, eine brauchbare Hydrophobierung nicht erreicht werden. Vielmehr wird die Silikonharzbehandlung nur zum Zweck vorgenommen, um den Wasserbedarf im Produktionsverfahren und/oder den Bindemittelbedarf zu verringern.

Außerdem sind in der EP 128 305 B1 Formkörper aus geblähtem Perlit, in welchen das Bindemittel Kalkhydrat oder ein Kieselsäureester ist, beschrieben. Durch Zugabe eines Katalysators (sauer/basisch) wird amorphe Kieselsäure ausgefällt. Die als Katalysator verwendete Säure beziehungsweise Lauge muß jedoch restlos ausgewaschen werden, weil sonst in der Regel ausblühfähige Salze entstehen würden.

Grundsätzlich ist zwar eine Verfestigung von feinkörniger Perlite mit Kieselsäureestern möglich, jedoch mit dem erheblichen Nachteil, daß die Kapillarporen durch die Kieselsäureablagerung verstopft werden, das heißt, daß die Wasserdampfdiffusion des Formkörpers total unterbunden wird. Ferner ist der Mengenbedarf erheblich, und die Abspaltung von Ethanol beziehungsweise Methanol verbietet eine Prozeßführung auf dieser Basis. Dies wurde durch eigene Versuche bestätigt.

Der genannten Druckschrift ist keine Aussage zur Wärmeleitfähigkeit, Wasseraufnahme, Dimensionsstabilität und dergleichen zu entnehmen, was auch nicht verwundert, da derartige Formkörper bei Wasserlagerung immer einer Erweichung unterliegen, es sei denn, daß eine Autoklavenbehandlung durchgeführt wird, wovon jedoch in der genannten Druckschrift keine Rede ist.

Von einer Hydrophobierung, geschweige denn von einem Gehalt an einem Alkylsilikonharz im Bindemittel ist in dieser Druckschrift keine Rede.

In der DE 14 84 072 C2 sind Schallschluckplatten aus Perlitteilchen mit einer Mischung von Wasserglas (Natriumsilikat) als Bindemittel beschrieben.

Daher haben diese Platten alle weiter oben angegebenen mit der Verwendung von Wasserglas als Bindemittel verbundenen negativen Gebrauchseigenschaften, wie hinsichtlich der Wasseraufnahme, Schwindung, Quellung und dergleichen.

Es erfolgt ein Überziehen mit einem hydrophobierenden Film. Es handelt sich um eine Oberflächenhydrophobierung de Mischgutes, um den Mengenbedarf an Wasserglasbindemittel zu verringern. Trotz dieser Maßnahme wird zum Beispiel im Beispiel 1 auf 350 g Vermiculit + 75 g Asbest + Hydrophobierungsmittel die hohe Menge von 293 g Natronwasserglas benötigt.

Nach der Trocknung erfolgt eine Behandlung mit einer Silicofluorid-Lösung. Diese Maßnahme bewirkt die Verfestigung der Wasserglasbindung, das heißt, daß ohne die Behandlung mit dem Silicofluorid eine Erweichung bei Wasserlagerung erfolgen würde (Spalte 3, Zeilen 18 bis 24), was die Nachteile der Verwendung von Wasserglas als Bindemittel verdeutlicht. Zur Erzielung der Hydrophobierung beziehungsweise Imprägnierung sind in der genannten Druckschrift 2 Behandlungen erforderlich, wobei für das Basisagglomerat ein wasserlösliches Silikonharz aufgesprüht werden kann (Spalte 2, Zeilen 18 bis 22). Die Nachteile der Hydrophobierung durch Aufsprühen wurden bereits weiter oben abgehandelt. Auch in dieser Druckschrift handelt es sich also nicht um eine Massenhydrophobierung, sondern um eine Oberflächenhydrophobierung, wobei ein schichtenbildender Aufbau mit unterschiedlichen Bindemitteln/Hydrophobierungbeziehungsweise Imprägniereffekten erfolgt.

Aus der DE 23 23 659 C2 sind Schallabsorptionsplatten, hergestellt aus Perlit und als Bindemittel einer Mischung von Natriumsilikat und Natriumsiliciumfluorid bekannt. Zwar wird durch die aus dieser Bindemittelmischung ausgefällte amorphe Kieselsäure in gelförmiger Struktur eine verfestigende Wirkung erzielt, diese ist jedoch nicht wasserbeständig. Daher wird versucht, in der genannten Druckschrift, durch Zusatz von Natriumsilicofluorid als Härterkomponente eine Wasserfestigkeit zu erzielen. Die in der genannten Druckschrift gebildeten Silicagele weisen aber eine grobkörnige Struktur auf, die eine wasserfeste Bindung mit Perlitepartikeln nicht bewirken kann. Die Gelstrukturen weisen eine nicht definierbare Anzahl von Wassermolekülen auf, sind voluminös, nicht wasserbeständig und führen zur Austrocknung des Gelwassers. Um diesen Vorgang zu unterbinden, ist die Behandlung mit Natriumsilicofluorid als Härtekomponente erforderlich. Vermutlich wird durch diese Maßnahme die Gelstruktur gebrochen, wobei die amorphe Kieselsäure in die Kristallstruktur des Natriumsilicofluorides eingelagert wird und so die verfestigende Wirkung erhält.

Diese bekannten Schallabsorptionsplatten haben jedoch die folgenden gravierenden Nachteile:

a) Die Gegenwart der Natriumsalze führt zu Salzausblühungen.

b) Das Produkt ist vergleichsweise spröde bis kristallin.

c) Die Wärmeleitfähigkeit ist erheblich beeinträchtigt.

d) Die Schwindung/Quellung bei Wasserlagerung ist beträchtlich.

e) Der vergleichsweise hohe Bindemittelbedarf führt zwangsläufig zu Produkten mit Rohdichten > 200 kg/m$^3$.

Daher sind solche Schallabsorptionsplatten für die Verwendung als nichtbrennbare Wärmedämmplatten völlig untauglich. Eigene Versuche mit mit Wasserglas und Natriumsilicofluorid gebundenen Perliteplatten zur Anwendung als Wärmedämmplatten ergaben, daß derartige Platten wegen der beträchtlichen Schwindung (Meßwerte bis zu 3 mm/m), vergleichsweise hohen Wasseraufnahme (Meßwerte bis 64 M-%), quasi keinen schlüssigen Verbund mit Beschichtungswerkstoffen (Haftzugfestigkeitswerte $< 0,1$ N/mm$^2$) ermöglichen, das heißt insgesamt ein völlig ungeeignetes Qualitätsprofil besitzen.

Zwar wird in der genannten Druckschrift behauptet, daß die dort beschriebenen Schallabsorptionsplatten eine sehr gute Widerstandsfähigkeit gegenüber Wetter- beziehungsweise Witterungseinflüssen beziehungsweise -bedingungen hätten, nach eigener Erfahrung werden aber solche in der Regel an Außenwänden nicht verwendet, sondern nur im Innenbereich für Decken und gegebenenfalls Wände. Es ist nämlich bekannt, daß derartige Platten durch hygrische Belastung (Feuchteeinwirkung) zu Verformungen/Verwerfungen neigen. Um dies zu unterdrücken, werden Schallabsorptionsplatten selbst für die Verwendung in Innenbereichen (nicht nur aus optischen Gründen) mit einem Feuchte abweisenden Anstrich versehen.

Weiterhin sind aus DE 28 32 787 C2 schalldämmende und schalldämpfende Bauplatten, die aus Perlit mit einer Körnung von 0,1 bis 7 mm und 100 bis 140 g Zement je dm$^3$ Perlit hergestellt worden sind, bekannt.

Es handelt sich in dieser Druckschrift um eine speziell auf Schalldämmung beziehungsweise Schalldämpfung ausgerichtete Plattenkonstruktion. Aufgrund des vorliegenden Stoffgemisches ist zu erwarten, daß die Rohdichte derartiger Platten zumindest im Bereich von 300 bis 400 kg/m$^3$ liegt. Derartige Platten werden im allgemeinen nicht direkt den Witterungseinflüssen ausgesetzt, sondern in einer Verbundkonstruktion mit anderen Werkstoffen beschichtet, das heißt geschützt.

In dieser Druckschrift (Seite 2, Zeilen 45 bis 48) wird empfohlen, Perlit mit einer Körnung über 1 mm zu verwenden. Grobkörniger Perlit hat jedoch den gravierenden Nachteil, daß er hinsichtlich der Wärmeleitfähigkeit zu schlechten Ergebnissen führt. Die schalldämmenden und schalldämpfenden Bauplatten dieser Druckschrift sind jedoch nicht auf die Wärmedämmung ausgerichtet, sondern auf die Erzielung einer speziell ausgeprägten Schalldämpfung unter Anstreben einer Stützkornfunktion, um die Schallwellen in den zwischen der grobkörnigen Struktur verbleibenden Hohlräumen abzulenken beziehungsweise zu brechen.

Auch der Zusatz von Kautschuklatex ist in der genannten Druckschrift angesprochen.

Von einer Hydrophobierung, geschweige denn einer Massenhydrophobierung ist jedoch keine Rede.

In der deutschen Auslegeschrift 1 303 249 sind Perlite-Körper mit einem Bindemittel aus gelöstem Kieselsäureester oder Wasserglas, gegebenenfalls zusammen mit Kalkmilch, beschrieben. Kieselsäureester und Wasserglas führen zu den oben ausführlich beschriebenen gravierenden Nachteilen. Die Zugabe von Kalkmilch führt in der in der genannten Druckschrift beschriebenen Bindemittelkombination (Kieselsäureester/Wasserglas) zur sofortigen Bildung von Calciumsilikathydrat mit gelförmiger Struktur; es entsteht eine schlagartige Verdickung, aber keine Verfestigung. Hierzu wird eine Trocknung bei erhöhten Temperaturen bis 900°C als vorteilhaft zur Erzielung fester Formkörper vorgenommen (Spalte 4, Zeilen 32 bis 34).

Aus der EP 475 302 A1 sind nichtbrennbare Platten auf der Basis von expandierter Perlitekörnung von $< 1$ mm bekannt. Als den dortigen Anforderungen der Bindefestigkeit, der Umweltverträglichkeit und Wirtschaftlichkeit genügend werden die Bindemittel 1-wertige Silikate, wie Natriumsilikat und Kaliumsilikat, bei besonderer Bevorzugung des Natriumsilikates empfohlen (Seite 4, Zeilen 38 bis 44). Zwar ist als Bindemittel auch kolloidales Siliciumdioxid als in Erwägung zu ziehend genannt, jedoch als nicht bevorzugt angegeben, da es kein filmbildendes Bindemittel der Art von löslichen Silikaten ist (Seite 4, Zeilen 49 bis 50). Damit wird von der Verwendung von kolloidalem Siliciumdioxid als Bindemittel praktisch abgeraten, so daß der ganze Text der EP 475 302 A1 in die Richtung lenkt, nicht mit kolloidalem Siliciumdioxid zu arbeiten, sondern mit Natriumsilikat beziehungsweise anderen Alkalisilikaten. Deren gravierende Nachteile sind bereits oben ausführlich geschildert. Besonders hervorzuheben ist die zu große Wärmeleitfähigkeit und damit die ungenügende Wärmedämmung. Demgemäß ist in der genannten Druckschrift keine Rede von der Verwendung der dortigen Platten zur Wärmedämmung. Hinzukommt noch wegen des verhältnismäßig hohen Bindemittelbedarfes die verhältnismäßig hohe Rohdichte von 160,2 bis 480,6 kg/m$^3$ (= 10 pcf bis 30 pcf [Seite 3, Zeilen 47 bis 48]). Auch führt die Verwendung von Alkalisilikaten als Bindemitteln zu einer so geringen Festigkeit der Produkte, zu spröden und brüchigen Produkten, mit einer Bindung geringer Wasserbeständigkeit. Der zweite Bindemittelbestandteil ist ein Alkylsilikonharz (Seite 12, Zeilen 37 bis 38 [Patentanspruch 11]).

In der US 4 525 388 ist das Überziehen von Perlit mit Silicon beschrieben, mit einer Massenhydrophobierung hat das nichts zu tun.

Aus der US 3 103 254 A sind Akustikziegel und deren Herstellung bekannt, wobei als ein Bindemittelbestandteil Natriumsilikat verwendet wird, dessen gravierende Nachteile oben geschildert sind.

In CHEMICAL ABSTRACTS, Vol 89, No. 26, 25. Dezember 1978, Seite 280 ist die Verminderung der Wasserabsorption durch ein Silicon und ein Phenol-Formaldehyd-Harz an einer Zusammensetzung aus Wasserglas und expandiertem Perlitsand beschrieben. Dort liegt also wieder das Wasserglas mit seinen oben beschriebenen nachteiligen Eigenschaften vor.

Aus der GB 2 010 876 A ist eine Bindemittelmischung, bestehend aus einem Alkalimetallsilikat, Silicon und Wasser in Form eines Hydrogelsoles bekannt, wobei Perlit nicht erwähnt ist. Dort liegt also wiederum das Alkalisilikat

EP 0 829 459 B1

mit seinen oben beschriebenen nachteiligen Eigenschaften vor.

In CHEMICAL ABSTRACTS, Vol. 91, No. 4, 23. Juli 1979, abstract no. 26077j ist ein Bindemittel, welches durch Hydrolyse von Ethylsilikat in einem organischen Lösungsmittel in Gegenwart von Polymethylsiloxan- oder Polymethylphenylsiloxanharz hergestellt worden ist für keramische Schalen beschrieben.

In DATABASE WPI, Week 9335 Derwent Publications Ltd. AN 93-279 937 ist ein Bindemittel mit einem Gehalt an einem Silikasol, einem Gelbildner (Ammoniumcarbonat, einem flüssigen Polyethylensiloxan) und Borsäure beschrieben. Von der Verwendung von Perlit war keine Rede.

Schließlich ist aus der US 4 439 239 A eine Pigmentüberzugskomposition mit einem Gehalt an einer Dispersion von kolloidalem Siliciumdioxyd und hydrolysierbaren Trialkoxysilanen bekannt. Von Perlit ist keine Rede.

Der Erfindung liegt daher die Aufgabe zugrunde, unter Behebung der Nachteile des Standes der Technik die Verwendung von nichtbrennbaren Platten auf der Basis von expandierter Perlite, welche bei ihrer Unbedenklichkeit in Bezug auf Ökologie/Baubiologie sowie Toxikologie ein überlegenes Qualitätsprofil, insbesondere hinsichtlich der Wärmedämmung, der Wasseraufnahme, der nicht abbaufähigen, systemverträglichen Hydrophobie sowie der Festigkeit und Dimensionsstabilität bei Temperaturbelastung aufweisen, zu schaffen.

Das Obige wurde überraschenderweise durch die Erfindung erreicht.

Es wurde nämlich überraschenderweise festgestellt, daß - im Vergleich zum Stand der Technik - überraschende Qualitätsmerkmale, insbesondere die Wärmedämmung betreffend, für aus expandierter Perlite hergestellte Platten durch die Verwendung von amorpher Kieselsäure, vorzugsweise aus Kieselsol, als wesentlichem Bindemittel erreicht werden können.

Kieselsol, eine kolloidale Lösung von 30 bis 40 Gew.-% amorphem Siliciumdioxid in Wasser, mit einer spezifischen Oberfläche von > 200 m$^2$/g und einem Alkaligehalt von < 0,30%, ist unter Markennamen, wie Levasil$^®$, Ludox$^®$ und FFB-40 k$^®$ handelsüblich. Der Verfestigungseffekt basiert auf der Abspaltung von Wasser beim Übergang in den vernetzten Gelzustand während der Trocknung nach der Gleichung:

$$Si(OH)_4 \rightarrow SiO(OH)_2 \rightarrow SiO_2 + H_2O$$

Es entstehen adhäsive und kohäsive Bindungen aus Kieselsäure in kolloidaler Verteilung, die chemisch inert und temperaturbeständig sind. Ein signifikantes Produktmerkmal besteht in dem irreversiblen Übergang des kolloidal gelösten Siliciumdioxids in festes, wasserunlösliches Siliciumdioxid. Diese bekannte Siloxan-Bindung (Si-O-Si) dient erfindungsgemäß zur bisher nicht bekannten, schlüssigen Bindung der feinkörnigen Perlitepartikel, wobei die Hydroxylgruppen auf der Oberfläche der Perlitepartikel beim Trocknungsvorgang kondensieren und die stabile Siloxan-Bindung bewirken.

Die Eignung von Wärmedämmplatten zur Außenwanddämmung von Gebäuden setzt voraus, daß die wärmedämmende Funktion durch eindringende Feuchtigkeit nicht gemindert wird. In der Regel werden bei porösen, mineralischen Wärmedämmplatten geeignete Hydrophobierungsmittel im Sprühverfahren oder Anstrichverfahren präventiv gegen Feuchteeindringung oberflächenbehandelt. Da sich diese Maßnahme in der Praxis jedoch als nicht ausreichend erwiesen hat, wird nach diesem Stand der Technik zur Bemessung der Wärmeleitfähigkeit der Meßwert - W/mK trocken - mit einem erheblichen Zuschlag belegt, das heißt die geringere Wärmedämmung durch eine dickere Dämmung ausgeglichen, was einen höheren Aufwand mit sich bringt. Dies ist unter anderen ein wesentlicher Grund dafür, daß hochporöse, mikroporige mineralische Produkte, zum Beispiel auf der Basis von Calciumsilikat oder Perlite, zur Außenwanddämmung von Gebäuden praktisch keine Verwendung finden.

Zur Erzielung einer homogenen Massenhydrophobie ist in den erfindungsgemäß verwendeten Platten die amorphe Kieselsäure [SiO$_2$] zusammen mit einem Alkylsiliconharz mit der expandierten Perlite homogen vermischt.

Ein weiteres überraschendes Merkmal der erfindungsgemäß verwendeten Platten sind die wesentlich besseren mechanischen Eigenschaften wie Kantonfestigkeit, Abriebfestigkeit und Elastizität.

Gegenstand der Erfindung ist daher die Verwendung von nichtbrennbaren Wärmedämmplatten auf der Basis von expandierter Perlite-Körnung von < 1 mm mit einem Gehalt an einem Bindemittel, enthaltend eine Mischung aus aus Kieselsol hergestellter amorpher Kieselsäure sowie einem Alkylsiliconharz und gegebenenfalls einem Polyvinylacetat und/oder einem Latex {organische[n] Zusatzstoff(en)} zur Wärmedämmung.

Im Gegensatz zum in DE 44 01 636 C2 verwendeten zweiten Bindemittelbestandteil Aminsalz eines sauren Metallphosphates oder Gemisch eines Aminsalzes eines sauren Metallphosphates und von Aminsalzen der Borsäure, die keine Hydrophobierung herbeizuführen vermögen, führen die in den erfindungsgemäß zur Wärmedämmung verwendeten Platten im Bindemittel verwendeten Alkylsilikonharze zu einer überragenden nicht abbaufähigen, systemverträglichen Massenhydrophobierung des Stoffsystemes Perlite + amorphe Kieselsäure. Bei diesen Alkylsilikonharzen handelt es sich um die einzigen systemverträglichen Hydrophobierungsmittel für Wärmedämmplatten auf Perlite-Basis. Dies gilt nicht nur im Vergleich zu den genannten Bindemitteln der genannten Druckschrift, sondern auch im Vergleich zu den bekannten Hydrophobierungsmitteln, wie Stearaten und Oleaten, die selbst bei hoher Dosierung in den erfindungsgemäß zur Wärmedämmung verwendeten Platten auf Perlite-Basis nicht nur praktisch unwirksam wären, son-

6

dern darüber hinaus den Verfestigungseffekt erheblich beeinträchtigen würden.

Überdies hat die Kombination von amorpher Kieselsäure und Alkylsilikonharz eine synergistische Wirkung. Versuche ohne Alkylsilikonharze, das heißt mit amorpher Kieselsäure allein als Bindemittel ergaben, daß der gepreßte und getrocknete Formkörper eine deutlich schlechtere Festigkeit aufweist, das heißt brüchig, bröselig ist, und bei Wasserlagerung zwar seine Formtreue beibehält, jedoch bis zu 200 M-% Wasser aufnimmt. Durch den im Gegensatz dazu stehenden synergistischen Effekt der Kombination von amorpher Kieselsäure und Alkylsilikonharz wird erst die Erzielung der vorteilhaften wärmedämmenden Eigenschaften der erfindungsgemäß zur Wärmedämmung verwendeten Platten möglich. So haben die erfindungsgemäß zur Wärmedämmung verwendeten nichtbrennbaren Wärmedämmplatten deutlich kleinere Wärmeleitfähigkeitswerte als die bekannten (mit im allgemeinen 0,06 W/mK).

Auch mit der Bindemittelkombination gemäß der genannten Druckschrift ergaben Laborversuche insgesamt negative Ergebnisse, das heißt, daß das Qualitätsprofil der erfindungsgemäß zur Wärmedämmung verwendeten Platten mit diesen Bindemitteln nicht erreicht wurde. Sie sind für eine völlig andere Verwendungsart konzipiert.

Auch von EP 310 138 A1 unterscheiden sich die erfindungsgemäß zur Wärmedämmung verwendeten Platten grundsätzlich im Vorliegen eines Silikonharzes zur Massenhydrophobierung, noch dazu unter synergistischer Wirkung hinsichtlich der Festigkeit und Wasserbeständigkeit. Das Besprühen mit Silikonharz in der genannten Druckschrift hat mit dieser Massenhydrophobierung nicht das Geringste zu tun. Ferner belegt die in den erfindungsgemäß zur Wärmedämmung verwendeten Platten verwendete amorphe Kieselsäure in feinster Teilchengröße (Nanobereich) im Gegensatz zur in der genannten Druckschrift als Füllstoff zugemischten amorphen Kieselsäure die Oberfläche der Perlite-Partikel, und bewirkt dadurch die feste Bindung der Perlite-Körnung. Im Gegensatz zu den Wärmeschutzbauelementen der genannten Druckschrift, bei welchen die bekannte Siloxan-Bindung zur bisher nicht bekannten, schlüssigen Bindung der feinkörnigen Perlite-Partikel schon deswegen allein nicht zustandekommen kann, weil dort die amorphe Kieselsäure mit den Perlite-Partikeln selbst nicht in Berührung kommt, beruht in den erfindungsgemäß zur Wärmedämmung verwendeten Platten die schlüssige Bindung der feinkörnigen Perlite-Partikel maßgeblich auf dieser Siloxan-Bindung.

Im Gegensatz zu den durch die Verwendung von Kieselsäureestern als Bindemitteln in EP 128 305 B1 herbeigeführten, durch eigene Versuche ermittelten negativen Ergebnissen wird demgegenüber bei den erfindungsgemäß zur Wärmedämmung verwendeten Platten durch die Verwendung der amorphen Kieselsäure zusammen mit den Alkylsilikonharzen ein synergistisch überlegenes Qualitätsprofil erzielt. Auch werden die Kapillarporen nicht durch Kieselsäureablagerung in die Wasserdampfdiffusion der zur Wärmedämmung verwendeten Platten in unerwünscht beeinträchtigender Weise verstopft.

Entsprechendes gilt gegenüber den Wärmedämmplatten von DE 14 84 072 C2 mit dem die genannten negativen Eigenschaften aufweisenden Wasserglas als Bindemittel und lediglich einer Oberflächenhydrophobierung.

Auch gegenüber den Wärmedämmplatten von DE 23 23 659 C2 zeichnen sich die erfindungsgemäß zur Wärmedämmung verwendeten Platten durch das insbesondere durch den Synergismus zwischen der amorphen Kieselsäure und dem Alkylsilikonharz überraschend herbeigeführte überlegene Qualitätsprofil aus, wobei auch die Nachteile der Gegenwart von Natriumsalzen in den Schallabsorptionsplatten der genannten Druckschrift ausgeschaltet sind.

Auch gegenüber DE 28 32 787 C2 mit dem ganz anderen System mit hohem Zementanteil heben sich die erfindungsgemäß zur Wärmedämmung verwendeten Platten durch ein überlegenes Qualitätsprofil, insbesondere hinsichtlich der Wärmeleitfähigkeit, ab.

Das gilt auch im Vergleich zu den Körpern aus Perlit der deutschen Auslegeschrift 1 303 249, soweit als Bindemittel Kieselsäureester oder Wasserglas verwendet wird, wie es bereits oben ausführlich beschrieben wurde, während das in noch höherem Maße im Vergleich zur Ausführungsform mit der Mitverwendung von Kalkmilch gilt, welche keine Verfestigung zustandekommen läßt.

Die erfindungsgemäße Verwendung wurde auch durch EP 475 302 A1 nicht nahegelegt. Der Grund dafür, daß dort von einer Verwendung zur Wärmedämmung keine Rede ist, daß wegen der Ausrichtung dieser Druckschrift auf die Verwendung von Alkalisilikaten als Bindemitteln sich die dortigen Platten zur Wärmedämmung nicht eignen, wobei dadurch, daß von der Verwendung von kolloidalem Silikagel mit der Angabe von nachteiligen Eigenschaften desselben abgeraten wird, von der Verwendung zur Wärmedämmung abgelenkt wurde.

Vorzugsweise werden bei der erfindungsgemäßen Verwendung Platten, welche Abmessungen von höchstens 1,0 m x 0,5 m insbesondere 0,5 m x 0,5 m, eine Dicke von 2,0 bis 10,0 cm, eine Rohdichte von 120 kg/m$^3$ bis 160 kg/m$^3$, insbesondere 125 bis 145 kg/m$^3$, ganz besonders 140 kg/m$^3$, eine Wärmeleitfähigkeit von < 0,050 W/mK, insbesondere 0,040 bis 0,047 W/mK, ganz besonders 0,045 W/mK, und eine Wasseraufnahme von < 10 Gew.-%, insbesondere < 6 Gew.-%, ganz besonders 2,0 bis 4 Gew.-%, aufweisen und bei einer Temperaturbelastung bis 800°C ihre Dimensionsstabilität behalten, eingesetzt.

Bevorzugt werden bei der erfindungsgemäßen Verwendung Platten, welche 80 bis 90 Gew.-% Perlite, 8 bis 18 Gew.-% amorphe Kieselsäure, 0,8 bis 1,5 Gew.-% Alkylsiliconharz sowie gegebenenfalls 1,0 bis 3,0 Gew.-% Polyvinylacetat und/oder 0,8 bis 1,5 Gew.-% Latex enthalten, eingesetzt.

Vorteilhaft wird als Alkylsiliconharz ein solches, welches aus einer, zweckmäßig mit Wasser verdünnbaren und lösungsmittelfreien, wäßrigen Siliconharz-Emulsion erhalten worden ist, eingesetzt.

Vorzugsweise wird als Alkylsiliconharz ein solches mit Alkylgruppen mit 1 bis 4, vor allem 1 und/oder 2, Kohlenstoffatom(en), insbesondere ein Polydimethylsiloxan, eingesetzt.

Nach einer vorteilhaften Ausführungsform wird als Polyvinylacetat ein Vinylacetat-Homopolymer, beispielsweise das von Folcolit® -Dispersion der Firma Follmann, eingesetzt. Nach einer anderen vorteilhaften Ausführungsform wird als Polyvinylacetat ein Vinylacetat-Copolymer, insbesondere ein Copolymer von Vinylacetat mit einen Vinylester einer langkettigen, verzweigten Carbonsäure, beispielsweise aus den weichmacherfreien Dispersionen Mowilith® DM 21, DM 211 und/oder DM 22 der Firma Hoechst Aktiengesellschaft, Frankfurt/Main, eingesetzt. Copolymere von Vinylacetat und Vinylestern von langkettigen, verzweigten Carbonsäuren haben gegenüber den Vinylacetat-Homopolymeren den zusätzlichen Vorteil, daß sie bei Hervorrufung einer gleich guten oder sogar besseren Einbindung/Verfestigung der feinteiligen Perlite-Körnung alkalibeständig sind. Weitere Beispiele sind Ethylen/Vinylacetat- und Vinylchorid/Vinylacetat-Copolymere. Es können auch mehrere Vinylacetat-Homopolymere und/oder -Copolymere eingesetzt werden.

Ferner ist es bevorzugt, als Latex einen Styrol/Butadien-Latex einzusetzen. Als Latex-Polymere können aber auch andere Butadien- oder Isopren-Homopolymere oder -Copolymere eingesetzt werden, beispielsweise Acrylnitril/Butadien-, Acrylnitril/Butadien/Styrol-, Isobuten/Isopren- und Acrylnitril/Isopren-Copolymere.

Durch diese fakultativen organischen Zusatzstoffe Polyvinylacetat und/oder Latex, die in Kombination mit der amorphen Kieselsäure als Hilfsbindemittel wirken und eine besonders vorteilhafte Bindemittelfunktion bewirken, ist die Festigkeit der erfindungsgemäß zur Wärmedämmung verwendeten Platten zusätzlich erhöht.

Vorteilhaft werden bei der erfindungsgemäßen Verwendung als Platten solche, welche durch Verdichten eines homogen aufbereiteten Mischgutes, enthaltend Perlite-Körnung von < 1 mm, vorteilhaft mit einer Schüttdichte < 60 kg/m$^3$, insbesondere 50 bis 60 kg/m$^3$, ganz besonders 55 kg/m$^3$, sowie eine wäßrige Dispersion mit einem Gehalt an der amorphen Kieselsäure in kolloidaler Lösung und den/die organischen Zusatzstoff(e), insbesondere in einer Formenpresse, und Trocknen bei einer Umlufttemperatur von 100 bis 150°C, insbesondere 120°C, erhalten worden sind, eingesetzt.

Es ist auch bevorzugt, bei der erfindungsgemäßen Verwendung als Platten solche, zu deren herstellung das Verdichten an einem Mischgut, welches durch Einbringen einer Mischung der kolloidalen Lösung der amorphen Kieselsäure und des/der organischen Zusatzstoffe[s] mit einer Sprühvorrichtung in die expandierte Perlite erhalten worden ist, vorgenommen worden ist, einzusetzen. Dadurch wird besonders gut gewährleistet, daß jedes Perlite-Partikel mit einem wirksamen Film des Bindemittels {einschließlich des/der organischen Zusatzstoffe[s]} belegt wird.

Vorteilhaft werden als Platten solche, zu deren Herstellung die kolloidal gelöste Kieselsäure in wäßriger Dispersion als Kieselsol mit einem Gehalt von 30 bis 40 Gew.-% SiO$_2$, einer spezifischen Oberfläche von > 200 m$^2$/g und einem Alkaligehalt von < 0,3 Gew.-% eingesetzt worden ist, eingesetzt.

Vorzugsweise werden als Platten solche, zu deren Herstellung der kolloidal gelösten Kieselsäure das Alkylsiliconharz in Form einer, vorteilhaft mit Wasser verdünnbaren und lösungsmittelfreien, wäßrigen Emulsion mit einer Feststoffgehalt von 50 bis 65 Gew.-%, insbesondere 60 Gew.-%, in in Feststoffgehalten ausgedrückten Mengenanteilen der letzteren von 5 bis 15 Gew.-%, insbesondere 8 bis 13 Gew.-%, bezogen auf den Kieselsäurefeststoffgehalt der ersteren, zugemischt worden ist, einzusetzen. Beispiele für Alkylsiliconharze sind die Handelsprodukte SITREN® 595 (Goldschmidt AG, Essen) und BS-97® (Wacker-Chemie GmbH, München).

Es ist auch bevorzugt, als Platten solche, zu deren Herstellung der kolloidal gelösten Kieselsäure und der Alkylsiliconharz-Emulsion das Polyvinylacetat in Form einer, vorteilhaft weichmacherfreien, wäßrigen, gegebenenfalls ein Schutzkolloid, insbesondere einen Polyvinylalkohol, enthaltenden, Polyvinylacetat-Dispersion mit einem Feststoffgehalt von 40 bis 60 Gew.-%, insbesondere 50 Gew.-%, von welchletzterem zweckmäßig mindestens 92 Gew.-% Polyvinylacetat sind, in in Feststoffgehalten ausgedrückten Mengenanteilen der Polyvinylacetat-Dispersion von 20 bis 30 Gew.-%, insbesondere 22 bis 26 Gew.-%, ganz besonders 24 Gew.-%, bezogen auf die Summe der Feststoffgehalte der Kieselsäure und der Alkylsiliconharz-Emulsion, zugemischt worden ist, einzusetzen. Ein Beispiel für Polyvinylacetat-Dispersionen sind solche von einem Vinylacetat-Homopolymer mit dem Zusatz eines Polyvinylalkoholes als Schutzkolloid mit einem Feststoffgehalt von 50 ± 2 Gew.-% bei einem Polyvinylacetat-Gehalt von mindestens 46 Gew.-% und einer Partikelgröße von <5 µm, die unter dem Handelsnamen FOLCOLIT®-Disp. FL-D 5025 HPA (FOLLMANN & CO. GESELLSCHAFT FÜR CHEMIEWERKSTOFFE und VERFAHRENSTECHNIK MBH & CO. KG, Minden) handelsüblich ist. Mit einer solchen Polyvinylacetat-Dispersion, in welcher das Schutzkolloid ohne weiteres entbehrlich ist, wird eine besonders solide Einbindung der Perlite-Körnung erreicht. Ein weiteres Beispiel für Polyvinylacetat-Dispersionen sind solche weichmacherfreie von einem Copolymer von Vinylacetat mit einem Vinylester einer langkettigen, verzweigten Carbonsäure mit einem Feststoff- und Copolymergehalt von etwa 50 Gew.-% und einer Partikelgröße von 0,1 bis 1,5 µm, die unter den Handelsnamen Mowilith® DM 21, DM 211 und DM 22 (Hoechst Aktiengesellschaft, Frankfurt/Main) handelsüblich sind. Solche haben eine besonders hohe Alkalibeständigkeit.

Ferner ist es bevorzugt, als Platten solche, zu deren Herstellung der kolloidal gelösten Kieselsäure und der Alkylsiliconharz-Emulsion der Latex in Form einer, vorteilhaft Partikelgrößen von 50 bis 100 nm aufweisenden, wäßrigen Polymer-Dispersion mit einem Feststoffgehalt von 8 bis 12 Gew.-% in Mengenanteilen der letzteren von 5 bis 10 Gew.-%, insbesondere 6 bis 8 Gew.-%, ganz besonders 7 Gew.-%, bezogen auf die Summe der Feststoffgehalte der Kieselsäure und der Alkylsiliconharz-Emulsion, zugemischt worden ist, einzusetzen.

Durch Wahl der Mengenanteile der Bestandteile können die Effekte variiert beziehungsweise gezielt eingestellt werden.

Die erfindungsgemäß zur Wärmedämmung verwendeten Platten zeichnen sich im Vergleich zu handelsüblichen Wärmedämmplatten, insbesondere durch folgende Produktcharakteristika aus:

| | |
|---|---|
| - keine Faserstoffe | = physiologisch unbedenklich |
| - nichtbrennbar | = keine toxischen Gase bei Brandeinwirkung |
| - niedrige Rohdichte | = 120 kg/m$^3$ bis 160 kg/m$^3$ = niedriger als bei Mineralfaserplatten |
| - Wärmeleitfähigkeit | = < 0,050 W/mK |
| - Wasseraufnahme | = < 10 Gew.-%, insbesondere |
| | < 6 Gew.-%, ganz besonders 2 bis 4 Gew.-% |
| - dimensionsstabil | = keine Schwindung, keine Quellung |
| - Anwendungsgrenztemperaturen | = $T_{max}$ 800°C, Schwindung < 1,5 Vol.-% |
| - enthalten kein freies Quarz | = Staub ist nicht silicogen |
| - ökologisch//toxikologisch | = unbedenklich |
| - recyclebar | = problemlose Entsorgung |

Aufgrund dieser typischen Produktcharakteristika bieten die erfindungsgemäß verwendeten Platten ideale Voraussetzungen zur Wärmedämmung, wobei variable Konstruktionen und/oder Bauteile mit integrierter Wärmedämmeinlage im Verbund mit verschiedensten Werkstoffen und/oder Beschichtungsmaterialien möglich sind.

Nach einer speziellen vorteilhaften Ausführungsform der Erfindung werden daher als Platten solche, welche im Verbund mit Bauklebern und/oder Beschichtungswerkstoffen, insbesondere mineralischen Putzen und/oder Verblendklinkern, vorliegen, für die Außenwärmedämmung von Gebäuden eingesetzt. Weitere Beispiele für Materialien, mit welchen die erfindungsgemäß zur Wärmedämmung verwendeten Platten im Verbund vorliegen können, sind Laminate aus Holz- und/oder Kunststoff-Furnieren, Metallfolien, Gipskartonplatten, keramische Beläge (zum Beispiel Bodendämmung + aufgeklebte Fliesen) und Faserzementplatten (zum Beispiel für Brandschutzkonstruktionen).

Nach einer weiteren vorteilhaften Ausführungsform der Erfindung werden als Platten solche, welche im Verbund mit Tragschichten, insbesondere aus Beton, ganz besonders Leichtbeton, vor allem mit haufwerksporigem Gefüge, gegebenenfalls in Sandwich-Konstruktion beziehungsweise Systemaufbauten, vorliegen für die Außendämmung von Gebäuden eingesetzt.

Die beiden vorgenannten Ausführungsformen können auch kombiniert sein, daß heißt, daß die erfindungsgemäß zur Wärmedämmung verwendeten Platten sowohl im Verbund mit Bauklebern und/oder Beschichtungswerkstoffen und/oder sonstigen Verbundmaterialien als auch mit Tragschichten vorliegen können.

Da derartige Verbundwerkstoffe auch alkalische Bindemittel (wie Zement/Kalk) enthalten können, ist die Alkalibeständigkeit des gegebenenfalls verwendeten Bindemittels von sehr großer praktischer Bedeutung.

Die erfindungsgemäß zur Wärmedämmung verwendeten Platten können zweckmäßig als Brandschutzplatten zur Isolierung von gegen Feuer zu schützenden Bau- und/oder Funktionsteilen eingesetzt werden.

Das vorstehend aufgezeigte spezielle Qualitätsprofil der erfindungsgemäß zur Wärmedämmung verwendeten Platten bietet ideale Voraussetzungen zur industriellen Herstellung von wärmedämmenden Verbundkonstruktionen für Wandelemente und/oder Dachelemente und/oder Deckenelemente in variabler konstruktiver Ausbildung, wobei Verbundwerkstoffe nach den jeweils anwendungstechnischen und/oder nutzungsbedingten Kriterien verwendet werden können.

Dabei können die erfindungsgemäß zur Wärmedämmung verwendeten Platten im Verbund mit Beschichtungswerkstoffen quasi universell eingesetzt werden.

Die Herstellung großformatiger Wärmedämmplatten, zum Beispiel mit 3 m Länge und 1,25 m Breite, ist technisch durchführbar, wobei im Vergleich zur herkömmlichen Fassadendämmung das Handling auf Baustellengerüsten entfällt, das heißt im großformatigen Verbund mit den Beschichtungswerkstoffen gegen Bruchgefahr geschützt ist.

Die Erfindung wird an Hand der folgenden Beispiele näher erläutert.

Beispiel 1

In diesem Beispiel wurde eine Bindemittelmischung aus einem Kieselsol und einer Polydimethylsiloxan-Emulsion der folgenden Zusammensetzung verwendet, um ein Endprodukt der weiter unten ergebenden Zusammensetzung zu erhalten.

Zusammensetzung der Mischung aus Kieselsol und Polydimethylsiloxan-Emulsion

$$\text{Kieselsol} \quad = \frac{17,9}{40} \times 100 = 44,75 \text{ Gew.-Teile Kieselsol mit } 40 \text{ Gew.-\% SiO}_2$$

$$\text{Polydimethyl-siloxan-Emulsion} = \frac{1,5}{60} \times 100 = 2,5 \text{ Gew.-Teile Polydimethyl-siloxan-Emulsion mit 60 Gew.-\% Polydimethylsiloxan-Feststoff}$$

$$\overline{47,25 \text{ Gew.-Teile}}$$

100 Gew.-Teile der wäßrigen Bindemittelmischung enthalten:

Kieselsol = 94,70 Gew.-% x 0,40 = 37,9 Gew.-% $SiO_2$
Polydimethylsiloxan-Emulsion = 5,30 Gew.-% x 0,60 = 3,2 Gew.-% Polydimethylsiloxan-Feststoff

Es wurden 80,6 Gew.-Teile Perlite-Körnung von < 1 mm und einer Schüttdichte von etwa 55 kg/m$^3$ mit 47,25 Gew.-Teilen der Bindemittelmischung, bestehend aus 94,7 Gew.-% Kieselsol mit 40 Gew.-% $SiO_2$ und 5,3 Gew.-% Polydimethylsiloxan-Emulsion mit 60 Gew.-% Polydimethylsiloxan-Feststoff zu einer homogenen Mischung aufbereitet. Die Aufbereitung erfolgte in einem Zwangsmischer, wobei die flüssigen Komponenten mit einer Sprühvorrichtung eingetragen wurden. Dieses Stoffgemisch wurde nach einer Mischzeit von 1 Minute als rieselfähiges Mischgut mit einer Schüttdichte von 75 bis 80 g/l in den zu einer Plattenpresse gehörenden Formkasten in den Abmessungen 1,0 x 0,5 m in einer Füllhöhe von 150 mm gleichmäßig eingetragen und mit dem Preßstempel auf eine Plattendicke von 60 mm verdichtet. Anschließend erfolgte die Trocknung bei einer Umlufttemperatur von etwa 120°C zu einer Restfeuchte von etwa 2 Gew.-% innerhalb 5 Stunden.

Zusammensetzung des Endproduktes (nach dem Trocknen)

Perlite = 80,6 Gew.-%
$SiO_2$ = 17,9 Gew.-%
Polydimethylsiloxan = 1,5 Gew.-%

Beispiel 2

In diesem Beispiel wurde eine Bindemittelmischung aus einem Kieselsol, einer Polydimethylsiloxan-Emulsion und einer Polyvinylacetat-Dispersion der folgenden Zusammensetzung verwendet, um ein Endprodukt der weiter unten angegebenen Zusammensetzung zu erhalten. Die Polyvinylacetat-Dispersion war eine Dispersion eines Vinylacetat-Homopolymers mit dem Zusatz eines Polyvinylalkoholes als Schutzkolloid mit einem Feststoffgehalt von 50 ± 2 Gew.-% bei einem Polyvinylacetat-Gehalt von mindestens 46 Gew.-% und einer Partikelgröße von <5 µm (Handelsname: FOLCOLIT®-Disp. FL-D 5025 HPA).

Zusammensetzung der Mischung aus Kieselsol, Polydimethylsiloxan-Emulsion und Polyvinylacetat-Dispersion

$$\text{Kieselsol} = \frac{11,2}{40} \times 100 = 28 \text{ Gew.-Teile Kieselsol mit 40 Gew.-\% } SiO_2$$

$$\text{Polydimethyl-siloxan-Emulsion} = \frac{1,4}{60} \times 100 = 2,3 \text{ Gew.-Teile Polydimethylsiloxan-Emulsion mit 60 Gew.-\% Polydimethylsiloxan-Feststoff}$$

$$\text{Polyvinyl-acetat-Dispersion} = \frac{3,0}{50} \times 100 = 6,0 \text{ Gew.-Teile Polyvinylacetat-Dispersion mit 50 Gew.-\% Polyvinylacetat-Feststoff}$$

$$\text{36,3 Gew.-Teile}$$

100 Gew.-Teile der wäßrigen Bindemittelmischung enthalten:

Kieselsol = 77,1 Gew.-% x 0,40 = 30,8 Gew.-% $SiO_2$
Polydimethylsiloxan-Emulsion = 6,3 Gew.-% x 0,60 = 3,8 Gew.-% Polydimethylsiloxan-Feststoff
Polyvinylacetat-Dispersion = 16,6 Gew.-% x 0,50 = 8,3 Gew.-% Polyvinylacetat-Feststoff

Es wurden 84,4 Gew.-Teile Perlite-Körnung von < 1 mm mit 36,3 Gew.-Teilen der Bindemittelmischung, bestehend aus 77,1 Gew.-% Kieselsol mit 40 Gew.-% $SiO_2$, 6,3 Gew.-% Polydimethylsiloxan-Emulsion mit 60 Gew.-% Polydimethylsiloxan-Feststoff und 16,6 Gew.-% Polyvinylacetat-Dispersion mit 50 Gew.-% Feststoff analog wie im Beispiel 1 zu einer homogenen Mischung aufbereitet, im Preßverfahren geformt und getrocknet.

Zusammensetzung des Endproduktes (nach dem Trocknen)

Perlite           = 84,4 Gew.-%
$SiO_2$           = 11,2 Gew.-%
Polydimethylsiloxan   = 1,4 Gew.-%
Polyvinylacetat    = 3,0 Gew.-%

Beispiel 3

Beispiel 2 wurde mit dem Unterschied wiederholt, daß an Stelle der Dispersion des Vinylacetat-Homopolymers als Polyvinylacetat-Dispersion dieselbe Menge einer weichmacherfreien Dispersion eines Copolymers von Vinylacetat mit einem Vinylester einer langkettigen, verzweigten Carbonsäure mit einem Feststoff- und Copoymergehalt von etwa 50% und einer mittleren Partikelgröße von 0,1 bis 1,5 μm (Handelsname: Mowilith[®] DM 21, DM 211 oder DM 22) verwendet wurde.

Die daraus hergestellten nichtbrennbaren Wärmedämmplatten hatten bei gleicher Rohdichte eine noch bessere Festigkeit.

Beispiel 4

In diesem Beispiel wurde eine Bindemittelmischung aus einem Kieselsol, einer Polydimethylsiloxan-Emulsion und einem Styrol//Butadien-Latex der folgenden Zusammensetzung verwendet, um ein Endprodukt der weiter unten angegebenen Zusammensetzung zu erhalten.

Zusammensetzung der Mischung aus Kieselsol, Polydimethylsiloxan-Emulsion und Latex

$$\text{Kieselsol} = \frac{11,6}{40} \times 100 = 29 \text{ Gew.-Teile Kieselsol mit } 40 \text{ Gew.-\% SiO}_2$$

$$\text{Polydimethyl-siloxan-Emul-sion} = \frac{1,4}{60} \times 100 = 2,3 \text{ Gew.-Teile Polydimethylsi-loxan-Emulsion mit 60 Gew.-\% Polydimethylsi-loxan-Feststoff}$$

$$\text{Latex} = \frac{1,1}{50} \times 100 = 2,2 \text{ Gew.-Teile Latex mit 50 Gew.-\% Polymer-Feststoff}$$

$$\underline{\hspace{5cm}}$$

$$33,5 \text{ Gew.-Teile}$$

100 Gew.-Teile der wäßrigen Bindemittelmischung enthalten:

Kieselsol = 86,6 Gew.-% x 0,40 = 34,6 Gew.-% $SiO_2$
Polydimethylsiloxan-Emulsion = 6,9 Gew.-% x 0,60 = 4,1 Gew.-% Polydimethylsiloxan-Emulsion mit 60 Gew.-% Polydimethylsiloxan-Feststoff
Latex = 6,5 Gew.-% x 0,50 = 3,3 Gew.-% Latex mit 50 Gew.-% Polymer-Feststoff

Es wurden 85,9 Gew.-Teile Perlite-Körnung von < 1 mm mit 33,5 Gew.-Teilen der Bindemittelmischung, bestehend aus 86,6 Gew.-% Kieselsol mit 40 Gew.-% $SiO_2$, 6,9 Gew.-% Polydimethylsiloxan-Emulsion mit 60 Gew.-% Polydimethylsiloxan-Feststoff und 6,5 Gew.-% Latex mit 50 Gew.-% Polymer-Feststoff analog wie im Beispiel 1 zu einer homogenen Mischung aufbereitet, im Preßverfahren geformt und getrocknet.

Zusammensetzung des Endproduktes (nach dem Trocknen)

Perlite = 85,9 Gew.-%
$SiO_2$ = 11,6 Gew.-%
Polydimethylsiloxan = 1,4 Gew.-%

Polymerfeststoff vom Latex = 1,1 Gew.-%

Die nach den obigen Beispielen 1 bis 3 hergestellten Platten hatten die in der folgenden Tabelle 1 zusammengestellten Qualitätsparameter:

Tabelle 1

| Qualitätsparameter | | Beispiel | | | |
|---|---|---|---|---|---|
| | | 1 | 2 | 3 | 4 |
| Rohdichte | kg/m$^3$ | 140,30 | 125,00 | 141 | 140,00 |
| Wärmeleitfähigkeit | W/mK | 0,046 | 0,042 | 0,045 | 0,045 |
| Druckfestigkeit | N/mm$^2$ | 0,25 | 0,20 | 0,43 | 0,30 |
| Wasseraufnahme | Gew.-% | 5,4 | 4,8 | 4,1 | 3,7 |
| Quellung/Schwindung | Vol.-% | keine | keine | keine | keine |

Bemerkung:

Zur Prüfung der Wasseraufnahme wurden die aus der jeweiligen Platte gesägten Prüfkörper 120 Stunden unter Wasser gelagert. Unter diesen Prüfbedingungen konnten weder eine Erweichung noch eine Quellung noch eine Schwindung festgestellt werden.

Zur Prüfung der Nichtbrennbarkeit wurden Probekörper in einem Naber-Laborofen innerhalb 30 Minuten auf 800°C erhitzt und weitere 300 Minuten dieser Temperatur ausgesetzt. Die Ergebnisse sind in der folgenden Tabelle 2 zusammengestellt.

Tabelle 2

| Qualitätsparameter | Beispiel | | | |
|---|---|---|---|---|
| | 1 | 2 | 3 | 4 |
| Gewichtsverlust | 2,3 Gew.-% | 3,7 Gew.-% | 3,7 Gew.-% | 3,5 Gew.-% |
| Schwindung | 0,24 Vol.-% | 0,30 Vol.-% | 0,28 Vol.-% | 0,28 Vol.-% |
| Brennbare Gase | keine | keine | keine | keine |

Die Prüfkörper waren nach dieser Ofenprüfung dimensionsstabil und zeigten keine Minderung der Festigkeit.

Beispiel 5

Zur industriellen Fertigung von großformatigen Wandelementen in Sandwichkonstruktion wurden die Tragschicht in einer vorgegebenen Schalungseinheit aus Beton, vorzugsweise einem Leichtbeton mit haufwerksporigem Gefüge, gebildet, und auf die planebene Naßbetonschicht erfindungsgemäße nichtbrennbare Wärmedämmplatten in variabler Dicke - bis ca. 10 cm - ganzflächig bündig aufgelegt und zum schlüssigen Verbund angepreßt beziehungsweise mit einer Bindemitteldispersion, nämlich einer Copolymerisat-Dispersion auf der Basis von Acryl- und (Meth)acrylsäureestern, schlüssig verklebt. Es kann beispielsweise aber auch ein handelsüblicher Baustoffkleber, der aus Zement + Acryldispersion + Wasser besteht, eingesetzt werden, in welchem Falle die Alkalibeständigkeit des Klebers wichtig ist. Anschließend wurde eine witterungsbeständige Schicht aus mehrlagigem Putzmörtel aufgetragen und einbaufertig konfektioniert, wodurch ein Sandwichelement mit optimaler Wärmedämmung erhalten wurde.

Für dieses Anwendungsbeispiel wurden die erfindungsgemäß zur Wärmedämmung verwendeten Platten in großformatiger Abmessung, beispielsweise bis etwa 3 m Länge und etwa 1,25 m Breite, hergestellt, wobei insgesamt technische und wirtschaftliche Vorteile erzielt wurden.

Ein weiteres Anwendungsgebiet sind Flachdachsysteme im Verbund mit Dichtungsbahnen und Paneelen.

**Patentansprüche**

1. Verwendung von nichtbrennbaren Platten auf der Basis von expandierter Perlite-Körnung von < 1 mm mit einem Gehalt an einem Bindemittel, enthaltend eine Mischung aus Kieselsol hergestellter amorpher Kieselsäure sowie einem Alkylsiliconharz und gegebenenfalls, als organischem Zusatzstoff oder organischen Zusatzstoffen, einem Polyvinylacetat und/oder einem Latex zur Wärmedämmung.

2. Verwendung von nichtbrennbaren Platten nach Anspruch 1, dadurch gekennzeichnet, daß man Platten, welche Abmessungen von höchstens 1,0 m x 0,5 m, insbesondere 0,5 m x 0,5 m, eine Dicke von 2,0 bis 10,0 cm, eine Rohdichte von 120 kg/m$^3$ bis 160 kg/m$^3$, insbesondere 125 bis 145 kg/m$^3$, eine Wärmeleitfähigkeit von < 0,050 W/mk, insbesondere 0,040 bis 0,047 W/mk, und eine Wasseraufnahme von < 10 Gew.-%, insbesondere 2,0 bis 4 Gew.-%, aufweisen und bei einer Temperaturbelastung bis 800°C ihre Dimensionsstabilität behalten, einsetzt.

3. Verwendung von nichtbrennbaren Platten nach Anspruch 1 oder 2, dadurch gekennzeichnet, daß man Platten, welche 80 bis 90 Gew.-% Perlite, 8 bis 18 Gew.-% amorphe Kieselsäure, 0,8 bis 1,5 Gew.-% Alkylsiliconharz sowie gegebenenfalls 1,0 bis 3,0 Gew.-% Polyvinylacetat und/oder 0,8 bis 1,5 Gew.-% Latex enthalten, einsetzt.

4. Verwendung von nichtbrennbaren Platten nach Anspruch 1 bis 3, dadurch gekennzeichnet, daß man als Platten solche, bei welchen als Alkylsiliconharz ein solches mit Alkylgruppen mit 1 bis 4, Kohlenstoffatom(en), insbesondere ein Polydimethylsiloxan, verwendet wird, einsetzt.

5. Verwendung von nichtbrennbaren Platten nach Anspruch 1 bis 4, dadurch gekennzeichnet, daß man als Platten solche, bei welchen als Polyvinylacetat ein Vinylacetat-Homopolymer und/oder ein Copolymer von Vinylacetat, insbesondere mit einem Vinylester einer langkettigen, verzweigten Carbonsäure verwendet wird, einsetzt.

6. Verwendung von nichtbrennbaren Platten nach Anspruch 1 bis 5, dadurch gekennzeichnet, daß man als Platten solche, bei welchen als Latex ein Styrol/Butadien-Latex verwendet wird, einsetzt.

7. Verwendung von nichtbrennbaren Platten nach Anspruch 1 bis 6, dadurch gekennzeichnet, daß man als Platten solche, welche durch Verdichten eines homogen aufbereiteten Mischgutes, enthaltend Perlite-Körnung von < 1 mm, vorteilhaft mit einer Schüttdichte < 60 kg/m$^3$, sowie eine wäßrige Dispersion mit einem Gehalt an der amorphen Kieselsäure in kolloidaler Lösung und den/die organischen Zusatzstoff(e), insbesondere in einer Formenpresse, und Trocknen bei einer Umlufttemperatur von 100 bis 150°C, insbesondere 120°C, erhalten worden sind, einsetzt.

8. Verwendung von nichtbrennbaren Platten nach Anspruch 1 bis 7, dadurch gekennzeichnet, daß man als Platten solche, zu deren Herstellung das Verdichten an einem Mischgut, welches durch Einbringen einer Mischung der kolloidalen Lösung der amorphen Kieselsäure und des/der organischen Zusatzstoffe[s] mit einer Sprühvorrichtung in die expandierte Perlite erhalten worden ist, vorgenommen worden ist, einsetzt.

9. Verwendung von nichtbrennbaren Platten nach Anspruch 1 bis 8, dadurch gekennzeichnet, daß man als Platten solche, zu deren Herstellung die kolloidal gelöste Kieselsäure in wäßriger Dispersion als Kieselsol mit einem Gehalt von 30 bis 40 Gew.-% SiO$_2$, einer spezifischen Oberfläche von > 200 m$^2$/g und einem Alkaligehalt von < 0,3 Gew.-% eingesetzt worden ist, einsetzt.

10. Verwendung von nichtbrennbaren Platten nach Anspruch 1 bis 9, dadurch gekennzeichnet, daß man als Platten solche, zu deren Herstellung der kolloidal gelösten Kieselsäure das Alkylsiliconharz in Form einer, vorteilhaft mit Wasser verdünnbaren und lösungsmittelfreien, wäßrigen Emulsion mit einem Feststoffgehalt von 50 bis 65 Gew.-%, insbesondere 60 Gew.-%, in in Feststoffgehalten ausgedrückten Mengenanteilen der letzteren von 5 bis 15 Gew.-%, insbesondere 8 bis 13 Gew.-%, bezogen auf den Kieselsäurefeststoffgehalt der ersteren, zugemischt worden ist, einsetzt.

11. Verwendung von nichtbrennbaren Platten nach Anspruch 1 bis 10, dadurch gekennzeichnet, daß man als Platten solche, zu deren Herstellung der kolloidal gelösten Kieselsäure und der Alkylsiliconharz-Emulsion das Polyvinylacetat in Form einer, vorteilhaft weichmacherfreien, wäßrigen, gegebenenfalls ein Schutzkolloid, insbesondere einen Polyvinylalkohol, enthaltenden, Polyvinylacetat-Disperion mit einem Feststoffgehalt von 40 bis 60 Gew.-%, insbesondere 50 Gew.-%, von welchletzterem zweckmäßig mindestens 92 Gew.-% Polyvinylacetat sind, in in Feststoffgehalten ausgedrückten Mengenanteilen der Polyvinylacetat-Dispersion von 20 bis 30 Gew.-%, insbesondere 22 bis 26 Gew.-%, bezogen auf die Summe der Feststoffgehalte der Kieselsäure und der Alkylsiliconharz-Emulsion, zugemischt worden ist, einsetzt.

12. Verwendung von nichtbrennbaren Platten nach Anspruch 1 bis 11, dadurch gekennzeichnet, daß man als Platten solche, zu deren Herstellung der kolloidal gelösten Kieselsäure und der Alkylsiliconharz-Emulsion der Latex in Form einer, vorteilhaft Partikelgrößen von 50 bis 100 nm aufweisenden, wäßrigen Polymer-Dispersion mit einem Feststoffgehalt von 8 bis 12 Gew.-% in Mengenanteilen der letzteren von 5 bis 10 Gew.-%, insbesondere 6 bis 8 Gew.-%, bezogen auf die Summe der Feststoffgehalte der Kieselsäure und der Alkylsiliconharz-Emulsion, zugemischt worden ist, einsetzt.

13. Verwendung von nichtbrennbaren Platten nach Anspruch 1 bis 12, dadurch gekennzeichnet, daß man als Platten solche, welche im Verbund mit Bauklebern und/oder Beschichtungswerkstoffen, insbesondere mineralischen Putzen und/oder Verblendklinkern, vorliegen, für die Außenwärmedämmung von Gebäuden einsetzt.

14. Verwendung von nichtbrennbaren Platten nach Anspruch 1 bis 13, dadurch gekennzeichnet, daß man als Platten solche, welche im Verbund mit Tragschichten, insbesondere aus Beton, gegebenenfalls in Sandwich-Konstruktion bzw. Systemaufbauten, vorliegen, für die Außendämmung von Gebäuden einsetzt.

15. Verwendung von nichtbrennbaren Platten nach Anspruch 1 bis 14, dadurch gekennzeichnet, daß man die Platten als Brandschutzplatten zur Isolierung von gegen Feuer zu schützenden Bau- und/oder Funktionsteilen einsetzt.

## Claims

1. The use of non-combustible plates on the base of expanded perlite grains of < 1 mm with a content of a binding agent, containing a mixture of amorphous silicic acid prepared from silica sol, as well as an alkylsilicone resin and a polyvinylacetate and/or a latex for heat insulation optionally as organic additive or organic additives.

2. The use of non-combustible plates according to claim 1, characterized in that plates are applied which have dimensions of at most 1.0 m x 0.5 m, especially 0.5 m x 0.5 m, a thickness of 2.0 to 10.0 cm, a gross density from 120 kg/m$^3$ to 160 kg/m$^3$, particularly 125 to 145 kg/m$^3$, a heat conductivity of < 0.050 W/mk, especially 0.040 to 0.047 W/mk, and an uptake of water of < 10 % by weight, particularly 2.0 to 4 % by weight, and maintain their dimensional stability at a temperature load up to 800°C.

3. The use of non-combustible plates according to claim 1 or 2, characterized in that plates are applied which contain 80 to 90 % by weight perlite, 8 to 18 % by weight amorphous silicic acid, 0.8 to 1.5 % by weight alkylsilicone resin as well as optionally 1.0 to 3.0 % by weight polyvinylacetate and/or 0.8 to 1.5 % by weight latex.

4. The use of non-combustible plates according to claims 1 to 3, characterized in that as plates such plates are applied in which as alkylsilicone resin one having alkyl groups containing 1 to 4 carbon atom(s), especially polydimethylsiloxane, is used.

5. The use of non-combustible plates according to claims 1 to 4, characterized in that as plates such plates are applied in which a vinylacetate homopolymer and/or a copolymer of vinylacetate, especially with a vinylester of a long chain branched carboxylic acid, is used as polyvinylacetate.

6. The use of non-combustible plates according to claims 1 to 5, characterized in that as plates such plates are applied in which a styrene/butadiene latex is used as latex.

7. The use of non-combustible plates according to claims 1 to 6, characterized in that as plates such plates are applied that have been obtained by densifying a homogenously processed blending material containing perlite grains of < 1 mm, advantagously having a bulk density of < 60 kg/m$^3$, as well as an aqueous dispersion having a content of said amorphous silicic acid in colloidal solution and the organic additive(s), particularly in a moulding press and by drying at an air-circulation temperature of 100 to 150°C, especially 120°C.

8. The use of non-combustible plates according to claims 1 to 7, characterized in that as plates such plates are applied, for the production thereof said densification has been conducted with a blending material which has been obtained by introducing a mixture of said colloidal solution of the amorphous silicic acid and the organic additive(s) into the expanded perlite with a spraying apparatus.

9. The use of non-combustible plates according to claims 1 to 8, characterized in that as plates such plates are applied, for the production thereof said collidal dissolved silicic acid has been used in aqueous dispersion as silica sol having a content or 30 to 40 % by weight $SiO_2$, a specific surface area of > 200 $m^2$/g, and an alkali content of < 0.3 % by weight.

10. The use of non-combustible plates according to claims 1 to 9, characterized in that as plates such plates are applied, for the production thereof there has been admixed to the collidal dissolved silicic acid the alkylsilicone resin in form of an advantagously water-dilutable and solvent-free aqueous emulsion having a solid content of 50 to 65 % by weight, especially 60 % by weight, in constituent amounts of the latter, expressed as solid-contents, from 5 to 15 % by weight, especially 8 to 13 % by weight, based on the silicic acid-solid content of the former.

11. The use of non-combustible plates according to claims 1 to 10, characterized in that as plates such plates are applied, for the production thereof there has been admixed the polyvinylacetate in form of an advantagously softener-free aqueous polyvinylacetate dispersion, optionally containing a protective colloid, particularly a polyvinylalkohol, having a solid content of 40 to 60 % by weight, especially 50 by weight, of which latter conveniently at least 92 % by weight are polyvinylacetate, expressed in constituent amounts, as solid contents, of the polyvinylacetate dispersion, from 20 to 30 % by weight, especially 22 to 26 % by weight, based on the sum of the solid contents of the silicic acid and the alkylsilicone resin emulsion to the collidal dissolved silicic acid and the alkylsilicone resin emulsion.

12. The use of non-combustible plates according to claims 1 to 11, characterized in that as plates such plates are applied, for the production thereof there has been admixed the latex in form of an aqueous polymer dispersion advantagously having particle sizes of 50 to 100 nm, containing a solid content of 8 to 12 % by weight, in constituent amounts of the latter from 5 to 10 % by weight, especially 6 to 8 % by weight, based on the sum of the solid contents of the silicic acid and the alkylsilicone resin emulsion, to the collidal dissolved silicic acid and the alkylsilicone resin emulsion.

13. The use of non-combustible plates according to claims 1 to 12, characterized in that as plates for the outside heat-insulation of buildings such plates are used, which exist in combination with construction adhesives and/or coating materials, especially mineral plasterworks and/or faced clinkerworks.

14. The use of non-combustible plates according to claims 1 to 13, characterized in that as plates such plates are used for the outside insulation of buildings, which exist in combination with supporting layers, especially of concrete, optionally in sandwich-construction and system assemblies, respectively.

15. The use of non-combustible plates according to claims 1 to 14, characterized in that the plates are used as fire-protection plates for insulating constructive and/or functional parts which are to be protected against fire.

## Revendications

1. Utilisation de plaques incombustibles à base de granules de perlite expansée de < 1 mm avec un contenu en liant, contenant un mélange d'acide silique amorphe produit de sol de silice, et une résine alkylsilicone, et éventuellement un acétate polyvinylique et/ou un latex pour l'isolation thermique, servant d'un ou des adjuvant/s organique/s.

2. Utilisation de plaques incombustibles suivant revendication 1, caractisée par l'utilisation de plaques mesurées de 1,0 m x 0,5 m maximum, en particulier 0,5 m x 0,5 m, d'une épaisseur de 2,0 jusqu'à 10,0 cm, d'une masse volumique apparante de 120 kg/ $m^3$ jusqu'à 160 kg/$m^3$, en particulier de 125 jusqu'à 145 kg/$m^3$ , d'une conductibilité thermique de < 0 , 050 W/mK, en particulier de 0 , 040 jusqu'à 0 , 047 W/mK, et d'une absorption d'eau de < 10 pourcentage en poids, en particulier de 2 , 0 jusqu'à 4 pourcentage en poids, tout en gardant leur stabilité dimensionnelle même pendant une charge thermique jusqu'a 800 °C.

3. Utilisation de plaques incombustibles suivant revendication 1 ou 2, caractérisées par l'utilisation de plaques contenant 80 jusqu'à 90 pourcentage en poids de perlite, 8 jusqu'à 18 pourcentage en poids d'acide silique amorphe, 0 , 8 jusqu'à 1 , 5 pourcentage en poids de résine alkylsilicone, et éventuellement 1 , 0 jusqu'à 3 , 0 pourcentage en poids d'acétate polyvinylique et/ou 0 , 8 jusqu'à 1 , 5 pourcentage en poids de latex.

4. Utilisation de plaques incombustibles suivant revendications 1 à 3, caractérisées par l'utilisation de plaques fabriquées d'une résine alkylsilicone celle des groupes alkyle de 1 à 4, et un ou des atome/s de carbone, en particulier un polydiméthilsiloxane.

5. Utilisation de plaques incombustibles suivant revendications 1 à 4, caractérisées par l'utilisation de plaques fabriquées d'un acétate vinyl-homopolymère à la place de l'acétate polyvinylique et / ou un copolymère de l'acétate vinylique, en particulier d'un vinylester d'un acide de carbone à chaîne longue et ramifiée.

6. Utilisation de plaques incombustibles suivant revendications 1 à 5, caractérisées par l'utilisation de plaques fabriquées d'un caoutchouc au styrène/butadiène.

7. Utilisation de plaques incombustibles suivant revendications 1 à 6, caractérisées par l'utilisation de plaques fabriquées par serrage d'un melange de traitement homogène, contenant des granules de perlite de < 1 mm, de préférence avec une densité de déchargement de < 60 kg/m$^3$, et une dispersion aqueuse contenant un acide silique amorphe sous forme de solution colloïdale et le/les adjuvant/s organique/s, en particulier sortantes d'une presse de moulage et sèchées à une température à circulation d'air de 100 à 150 ° C, en particulier de 120 ° C.

8. Utilisation de plaques incombustibles suivant revendications 1 à 7, caractérisées par l'utilisation de plaques fabriquées par serrage d'un mélange, obtenu par l'introduction en dispersant d'un mélange de la solution colloïdale de l'acide silique amorphe et de/des adjuvant/s organique/s dans les perlites expansées.

9. Utilisation de plaques incombustibles suivant revendications 1 à 8, caractérisées par l'utilisation de plaques fabriquées d'un acide silique à solution colloïdale dans une dispersion aqueuse, servant de sol de silice, contenant un pourcentage en poids de 30 à 40 de $SiO_2$, et d'une surface spécifique de > 200 m$^2$/g et contenant un pourcentage en poids de < 0 , 3 en alcali.

10. Utilisation de plaques incombustibles suivant revendications 1 à 9, caractérisées par l'utilisation de plaques fabriquées en mélangeant à l'acide silique à solution colloïdale la résine alkylsilicone sous forme d'une émulsion aqueuse, de préférence diluable à l'eau et exempt de solvant, contentant 5 à 65 de pourcentage en poids, en particulier 60 %, ceci exprimé en pourcentage en poids en matières solides, la dernière contiendra une quantité de 5 à 15 de pourcentage en poids, en particulier de 8 à 13 , cette valeur se réfère à celle en matière solide en acide silique du premier.

11. Utilisation de plaques incombustibles suivant revendications 1 à 10, caractérisées par l'utilisation de plaques fabriquées en melangeant à l'acide silique à solution colloïdale et à l'émulsion de résine alkylsilicone le polyvinylacétate sous forme d'une dispersion de polyvinylacétate, de préférence aqueuse et sans plastifiant, éventuellement contenant un colloïde protecteur, en particulier un alcool polyvinylique, celle-ci ayant 40 à 60 de pourcentage en poids en matière solide, en particulier 50 de poucentage en poids, dont le minimum de 92 de poucentage en poids en polyvinylacétate sera utile, ceci exprimé en pourcentage en poids en matières solides, la dispersion de polyvinylacétate contiendra une quantité de 20 à 30 de pourcentage en poids, en particulier de 22 à 26 de pourcentage en poids, et cette valeur se réfère à la somme des contenus en matières solides de l'acide silique et de l'émulsion de résine akylsilicone.

12. Utilisation de plaques incombustibles suivant revendications 1 à 11, caractérisées par l'utilisation de plaques fabriquées en melangeant à l'acide silique à solution colloïdale et à l'émulsion de résine alkylsilicone le latex sous forme d'une dispersion polymérique aqueuse, le volume des particules étant de préférence de 50 à 100 nm, et contenant 8 à 12 de pourcentage en poids en matière solide dont la dernière contiendra une quantité de 5 à 10 de pourcentage en poids, en particulier de 6 à 8 de pourcentage en poids, et cette valeur se réfère à la somme des contenus en matières solides de l'acide silique et de l'émulsion de résine akylsilicone.

13. Utilisation de plaques incombustibles suivant revendications 1 à 12, caractérisées par l'utilisation des plaques servantes à être combinées avec des coiles de bâtiment et/ou des matériaux de revêtement, en particulier des crépis minéraux et/ou des briques recuites de parement, et ceci servant à l'isolation thermique de bâtiments.

14. Utilisation de plaques incombustibles suivant revendications 1 à 13, caractérisées par l'utilisation des plaques servantes à être combinées avec des couches portantes, en particulier à base de béton, éventuellement dans une construction sandwich ou à l'aide d'unités de montage, et ceci servant à l'isolation thermique de bâtiments.

15. Utilisation de plaques incombustibles suivant revendications 1 à 14, caractérisées par l'utilisation de ces plaques dans leur fonction de plaques coupe-feu, afin d'isoler les secteurs de bâtiment et/ou les ensembles fonctionnels, qui sont à protéger contre l'incendie.